Europäisches Patentamt

(19) European Patent Office

Office européen des brevets

(11) Publication number: **0 305 394 B1**

## (12) EUROPEAN PATENT SPECIFICATION

(45) Date of publication of patent specification:
04.09.91 Bulletin 91/36

(51) Int. Cl.⁵: **D21C 9/06, B01D 33/70**

(21) Application number: **87903455.1**

(22) Date of filing: **15.04.87**

(86) International application number:
**PCT/SE87/00192**

(87) International publication number:
**WO 87/06962 19.11.87 Gazette 87/25**

## (54) ARRANGEMENT FOR LIQUID TREATMENT OF PULP.

(30) Priority: **13.05.86 SE 8602150**

(43) Date of publication of application:
**08.03.89 Bulletin 89/10**

(45) Publication of the grant of the patent:
**04.09.91 Bulletin 91/36**

(84) Designated Contracting States:
**AT DE FR GB SE**

(56) References cited:
**WO-A-85/02424**
**DE-C- 2 906 254**
**SE-C- 111 855**
**US-A- 2 185 868**

(73) Proprietor: **SUNDS DEFIBRATOR**
**INDUSTRIES AKTIEBOLAG**
**S-851 94 Sundsvall (SE)**

(72) Inventor: **GUDMUNDSSON, Per, Erik, Wilhelm**
**Linjevägen 18**
**S-860 30 Sörberge (SE)**
Inventor: **LINDSTRÖM, Alf, Inge**
**Johannedalsvägen 34**
**S-863 00 Sundsbruk (SE)**
Inventor: **BERG, Jan-Erik**
**Ba ogevägen 37 D**
**S-852 54 Sundsvall (SE)**

(74) Representative: **Sundqvist, Hans**
**Sunds Defibrator Industries Aktiebolag**
**Patents Dept. Ralambsvägen 7**
**S-112 59 Stockholm (SE)**

EP 0 305 394 B1

Jouve, 18, rue Saint-Denis, 75001 PARIS

## Description

This invention relates to an arrangement for the liquid treatment of pulp, which arrangement comprises a stand with two end rolls, over which an endless liquid pervious belt runs. The belt is a wire or a perforated belt, for example a steel belt. The belt is driven by one of the end rolls and slides over perforated covers on containers located therebeneath. A head box for the supply of pulp is located at one end of the belt, at the other end of which means for transferring the treated pulp are provided. Devices for the supply of treatment liquid to the pulp are located above the belt. The containers located beneath are intended for collecting liquid.

The devices for the supply of treatment liquid and also the containers extend in the transverse direction across the entire belt width, which can amount to 6 m and in certain cases can be still wider.

The supply of treatment liquid is effected by a plurality of devices located some distance above the belt. Each supply device normally sprays the liquid both rearward and forward in the running direction of the belt. This type of equipment is shown in WO-A1-85/02424 according to which there are means 11 for supply of treatment liquid. Each of these means comprises a feed pipe and a distribution member for applying the liquid onto the pulp layer while dividing the liquid flow into two parts, concurrent with and counter-current to the running direction of the web. In order to make maximum use of the liquid flow, half of it is directed in either direction. This implies, however, that the liquid applied counter-current has a tendency of mixing with the liquid content of the pulp (the impulse against the pulp web is great) instead of displacing the same.

The same kind of problem occurs in the device shown in US-A-2185868, which discloses a machine for filtering fluid-suspended solid matter. In this machine wash water is supplied by pipes 78 and sprayed onto the suspension by nozzles 79, both concurrent with and counter-current to the direction of a running filtering belt 7.

The above mentioned tendency of mixing exists also at concurrent application when the flow is too great. It is desired, however, to apply with each distribution device the maximum amount of liquid. Due to the aforesaid problems, the supply of treatment liquid must be restricted, which at the same time implies a restriction of the production.

The present invention has the object to solve this problem.

According to the invention, a softer and more efficient application of the treatment liquid is obtained, which implies that the production can be increased by at least 10% compared with a conventional arrangement for the liquid treatment of pulp. The characterizing features of the invention are apparent from the attached claims.

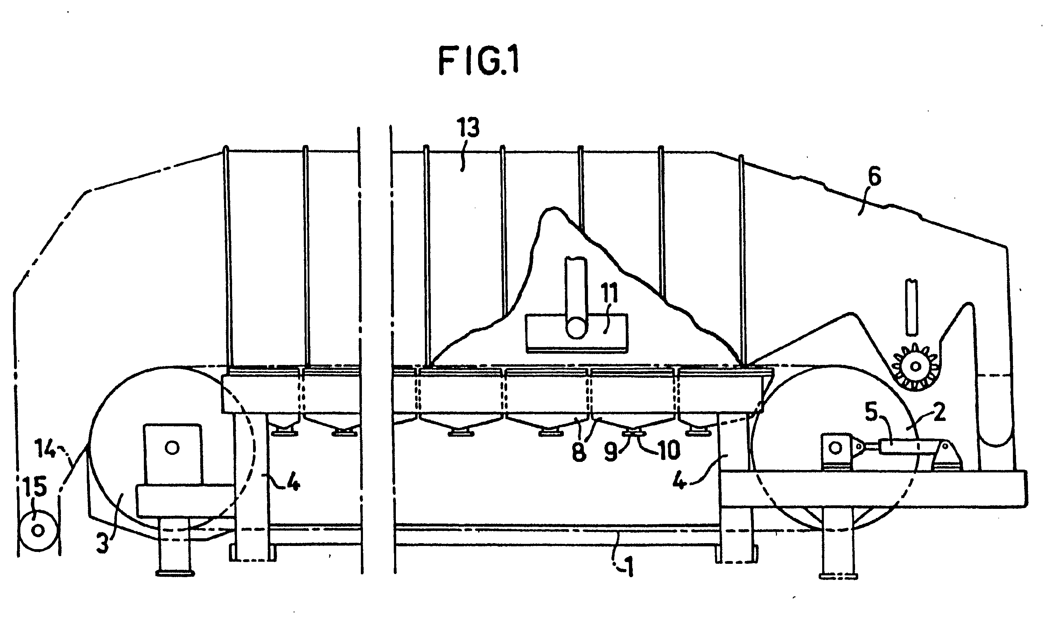

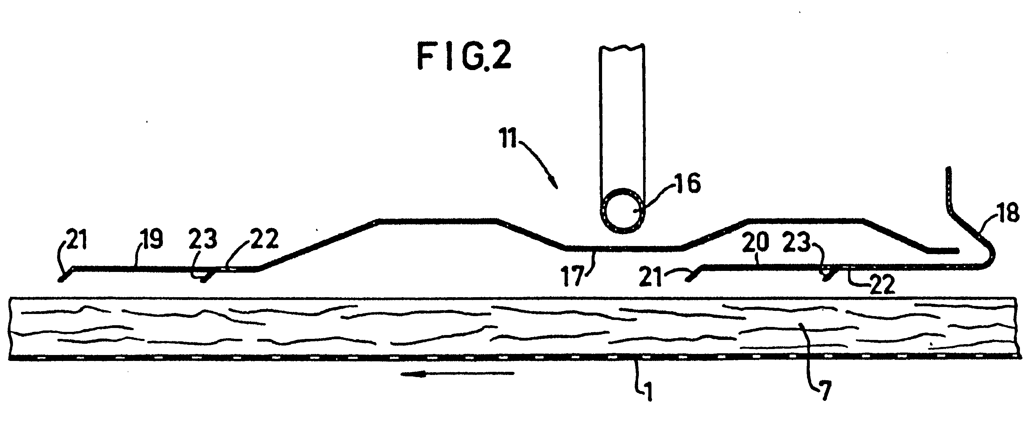

The invention is described in greater detail in the following, with reference to the accompanying drawings showing one embodiment of the invention. Fig. 1 shows an arrangement for the liquid treatment of pulp, and Fig. 2 is a cross-section through a device for the supply of treatment liquid.

The embodiment shown comprises an endless belt 1, which runs about a first and a second end roll 2 and, respectively, 3. The rolls are arranged in a stand 4 in such a manner, that the first roll 2 is movable by means of a stretching device 5, preferably a hydraulic one, for adjusting the belt tension. The driving is effected by the second roll 3.

At the first roll 2 a head box 6 is located for distributing the cellulose pulp to a uniform layer 7 on the belt 1. After the head box a plurality of containers 8 are arranged one after the other in the longitudinal direction of the belt. The containers are provided with perforated covers in support of the belt 1. Outlets 9 and, respectively, 10 are connected to the containers 8 for the discharge of liquid and, respectively, vapours and gases. The liquid outlet is located in the bottom of the container 8 to ensure effective drainage. The liquid level in the containers is controlled by special means, so that a little space for vapours and gases is maintained in the upper part. Thereby the drop of the liquid from the belt 1 down into the containers is small and thereby the foaming tendency is reduced.

Above the belt devices 11 for the supply of treatment liquid are located. A pressure difference is maintained over the pulp layer 7 in order to effect liquid transport transversely through the pulp layer. A hood 13 is provided above the belt.

At the second roll 3 a transfer device 14 for the completely treated pulp layer is provided, which device, for example, is a doctor blade. Beneath the doctor blade a conveying screw 15 is located for conveying the pulp to subsequent processing steps.

Each device 11 for the supply of treatment liquid comprises a feed pipe 16, distribution member 17, deflecting member 18 and application members in the form of a front plate 19 and a rear plate 20. The leading edge on each plate is provided with a lip 21, which is angular obliquely down to the belt. Both plates 19, 20 are provided with a gap 22. Several gaps may possibly be arranged one after the other in the plates 19, 20. In connection to each gap 22 a guide lip 23 is located.

The treatment liquid flows through the feed pipe 16 down into the distribution member 17, which should be substantially symmetrical relative to the feed pipe 16. The liquid flow is divided by the distribution member 17 into two parts, concurrent and, respectively, counter-current to the running direction of the belt 1. The concurrent flow thereafter flows onto the front plate 19 of the application member. The counter-current first is turned through 180° by the deflecting member 18 before it flows onto the rear plate 20 of the application member.

From the liquid flow to each plate 19, 20 a portion is separated through the gap 22 and by means of the guide lip 23 directed obliquely down to the pulp layer 7 on the belt 1. The remaining liquid flow is applied over the lip 21 located at the end of the plates 19, 20.

The liquid flow passing through each supply device 11, of course, depends on a great number of factors, such as belt speed, pulp layer thickness, distance between the supply devices, pressure drop over the pulp layer and nature of the treatment liquid as well as of the pulp. An arrangement according to the invention renders it possible to use liquid flows up to 13 m³ treatment liquid per ton of treated pulp. This implies flows of up to 10000litre/min at a production of 1000 tons of pulp per twenty-four hours. In certain cases even greater flows can be applied. Due to the fact, that the liquid according to the invention is applied concurrent and divided into partial flows, the conditions for displacing the liquid in the pulp layer are very favourable. This in its turn implies that the treatment efficiency and production can be increased by at least 10% compared with conventional technique.

The size of the gaps 22 can be adjusted and should be in the range 10-20 mm. The lips 21 and guide lips 23 should form an angle with the plates 19, 20 of the application member, which angle should be 25-45°, preferably 30-40°. The guide lips 23 should be located in the downstream edge of the gaps 22 and be formed so that the edge formed with the plates 19 and, respectively, 20 is sharp. The distance between the plates 19, 20 of the application member and the pulp layer should be minimized and preferably be smaller than 50 mm.

## Claims

1. An arrangement for the liquid treatment of pulp, comprising an endless running belt (1) for receiving a pulp suspension in the form of a pulp layer (7), means (11) located above the belt for the supply of liquid, which means extend across the entire width of the belt, and containers (8) for the collection of liquid beneath the belt, each liquid supply device (11) comprising a feed pipe (16), a distribution member (17) for dividing the liquid flow into two parts concurrent with and, respectively, counter-current to the running direction of the belt (1), and means (19, 20) for applying the liquid onto the pulp layer, **characterized in** that a device (18) for deflecting the counter-current part of the liquid flow through 180° is located in connection to the application member, that the application member comprises a front and a rear plane horizontal plate(19, 20), from which the liquid is intended to be applied on the pulp layer (7) in the same direction as the running direction of the belt, and that both said plates (19, 20) are provided with at least one gap (22) for applying a part of the liquid flow to each plate (19, 20) onto the pulp layer (7).

2. An arrangement as defined in claim 1, **characterized in** that the application member (19, 20) is formed for the application of four partial flows.

3. An arrangement as defined in claim 1 or 2, **characterized in** that each gap (22) is provided with an obliquely downward directed guide lip (23) in the downstream edge of the gap.

4. An arrangement as defined in any one of the preceding claims, **characterized in** that an obliquely downward directed lip (21) is located at the end of each of the two plates (19, 20) of the application member.

5. An arrangement as defined in claim 3, **characterized in** that each guide lip (23) forms a sharp edge with the respective plate (19, 20).

6. An arrangement as defined in any one of the claims 3-5, **characterized in** that the lips (21) and guide lips (23) form an angle of 25-45° with the plates (19, 20) of the application member.

7. An arrangement as defined in any one of the preceding claims, **characterized in** that the distribution member (17) is formed substantially symmetrically relative to the feed pipe (16).

## Patentansprüche

1. Anordnung zur Flüssigkeitsbehandlung einer Pulpe mit einem endlosen laufenden Band (1) zum Aufnehmen einer Pulpensuspension in Form einer Pulpenschicht (7), mit Einrichtungen (11), die über dem Band angeordnet sind, um eine Flüssigkeit zuzuführen, welche Einrichtungen quer über die gesamte Breite des Bandes verlaufen, und mit Behältern (8) zum Sammeln der Flüssigkeit unter dem Band, wobei jede Flüssigkeitszuführungseinrichtung (11) ein Zuleitungsrohr (16), eine Verteilungskammer (17) zum Teilen des Flüssigkeitsstromes in zwei Teile im Mitstrom und jeweils im Gegenstrom zur Laufrichtung des Bandes (1), und Einrichtungen (19, 20) zum Aufbringen der Flüssigkeit auf die Pulpeschicht umfaßt, **dadurch gekennzeichnet,** daß eine Vorrichtung (18) zum Ablenken des Gegenstromteils des Flüssigkeitsstromes um 180° in Verbindung mit dem Aufbringelement angeordnet ist, daß das Aufbringelement eine vordere und eine hintere ebene horizontale Platte (19, 20) umfaßt, von denen die Flüssigkeit auf die Pulpenschicht (7) in einer Richtung gleich der Laufrichtung des Bandes aufgebracht werden soll, und daß beide Platten (19, 20) mit wenigstens einem Spalt (22) zum Aufbringen eines Teils des Flüssigkeitsstromes zu jeder Platte (19, 20) auf die Pulpenschicht (7) versehen ist.

2. Anordnung nach Anspruch 1, dadurch gekennzeichnet, daß das Aufbringelement (19, 20) zum Aufbringen von vier Teilströmen ausgebildet ist.

3. Anordnung nach Anspruch 1 oder 2, dadurch gekennzeichnet, daß jeder Spalt (22) mit einer schräg nach unten gerichteten Führungslippe (23) an der stromabwärts liegenden Kante des Spaltes versehen ist.

4. Anordnung nach einem der vorhergehenden Ansprüche, dadurch gekennzeichnet, daß eine schräg nach unten gerichtete Lippe (21) am Ende jeder der beiden Platten (19, 20) des Aufbringelementes angeordnet ist.

5. Anordnung nach Anspruch 3, dadurch gekennzeichnet, daß jede Führungslippe (23) eine scharfe Kante mit der jeweiligen Platte (19, 20) bildet.

6. Anordnung nach einem der Ansprüche 3 bis 5, dadurch gekennzeichnet, daß die Lippen (21) und die Führungslippen (23) einen Winkel von 25 bis 45° mit den Platten (19, 20) des Aufbringelementes bilden.

7. Anordnung nach einem der vorhergehenden Ansprüche, dadurch gekennzeichnet, daß das Verteilungselement (17) im wesentlichen symmetrisch relativ zum Zuleitungsrohr (16) ausgebildet ist.

## Revendications

1. Agencement pour le traitement liquide de la pulpe qui comprend une courroie sans fin (1) pour recevoir une suspension de pulpe sous la forme d'une couche de pulpe (7), des moyens (11) situés au-dessus de la courroie pour l'alimentation en liquide, les moyens s'étendant sur toute la largeur de la courroie, et des conteneurs (8) pour recueillir le liquide (11) comprenant une conduite d'alimentation (16), un élément de destruction (17) pour diviser le courant liquide en deux parties s'écoulant respectivement de façon concourante et à contre-courant par rapport à la direction du déplacement de la courroie (1), et des moyens (19, 20) pour appliquer le liquide sur la couche de pulpe, caractérisé en ce qu'un dispositif (18) pour dévier la partie à contre-courant du flux liquide selon 180° est positionné en liaison avec l'élément d'application, en ce que l'élément d'application comprend des plaques planes horizontales avant et arrière (19, 20), à partir desquelles le liquide est destiné à être appliqué sur la couche de pulpe (7) dans la même direction que celle du déplacement de la courroie et en ce que les deux plaques (19, 20) sont munies d'au moins un intervalle (22) pour appliquer une partie du courant liquide à chaque plaque (19, 20) sur la couche de pulpe (7).

2. Agencement selon la revendication 1, caractérisé en ce que l'élément d'application (19, 20) est conçu de manière à appliquer quatre courants partiels.

3. Agencement selon l'une des revendications 1 ou 2, caractérisé en ce que chaque intervalle (22) est muni d'une lèvre de guidage (23) dirigée obliquement vers le bas et ménagée dans le bord aval de l'intervalle.

4. Agencement selon l'une quelconque des revendications précédentes, caractérisé en ce que une lèvre orientée obliquement vers le bas (21) est prévue à l'extrémité de chacune des deux plaques (19, 20) de l'élément d'application.

5. Agencement selon la revendication 3, caractérisé en ce que chaque lèvre de guidage (23) forme une arête vive avec la plaque respective (19, 20).

6. Agencement selon l'une quelconque des revendications précédentes, caractérisé en ce que les lèvres (21) et les lèvres de guidage (23) forment un angle de 25-45° avec les plaques (19, 20) de l'élément d'application.

7. Agencement selon l'une quelconque des revendications précédentes, caractérisé en ce que l'élément de distribution (17) est réalisé de façon à être simultanément symétrique par rapport à la conduite d'alimentation (16).

# FIG.1

EP 0 305 394 B1

FIG.2

EP 0 305 394 B1